# EUROPÄISCHE PATENTSCHRIFT

(11) **EP 2 282 917 B1**
(45) Veröffentlichungstag und Bekanntmachung des Hinweises auf die Patenterteilung: **28.05.2014**
(21) Anmeldenummer: 09761480.4
(22) Anmeldetag: 10.06.2009
(51) Int. Cl.: B60S 1/38, B60S 1/40

(54) **WISCHBLATT SOWIE WISCHARM**
WIPER BLADE AND WIPER ARM
BALAI D'ESSUIE-GLACE ET BRAS D'ESSUIE-GLACE

(30) Priorität: 10.06.2008 DE 102008027566
(43) Veröffentlichungstag der Anmeldung: 16.02.2011
(73) Patentinhaber: Valeo Systèmes d'Essuyage, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Vötsch, Reiner
(86) Internationale Anmeldenummer: PCT/EP2009/004178
(87) Internationale Veröffentlichungsnummer: WO 2009/149917

(56) Entgegenhaltungen:
- EP-A- 1 854 685
- DE-A1-102005 032 698
- JP-A- 10 329 655
- US-A- 3 408 678
- US-A1- 2009 070 952

## Beschreibung

Die Erfindung sich auf ein Wischblatt gemäß Oberbegriff Patentanspruch 1.

Wischblätter zur Verwendung bei Scheibenwischanlagen zum Reinigen von Scheiben an Fahrzeugen, insbesondere an Kraftfahrzeugen, sind in verschiedenen Ausführungen bekannt. Bekannt sind dabei insbesondere auch als Bügelwischblätter ausgebildete Wischblätter (JP 10-329655), die im Bereich des Wischgummis oder einer den Wischgummi tragenden Wischleiste mit einem elektrischen Heizelement versehen sind. Der elektrischer Anschluss des Heizelementes mit einer am Wischarm vorgesehenen Verbindungsleitung erfolgt über eine elektrische Stecker-Buchsen-Verbindung, die aus einem wischblattseitigen Verbindungselement an einem Wischblattadapter und aus einem wischarmseitigen Verbindungselement an einem als Haken ausgebildeten Wischarmende besteht. Die elektrischen Verbindungselemente sind dabei derart angeordnet sind, dass beim Einsetzen bzw. Fügen des Wischblattadapters in den von dem Haken gebildeten Wischarmadapter, d.h. bei der mechanischen Verbindung des Wischblattes mit dem Wischarm zugleich auch die elektrische Verbindung hergestellt wird. Nachteilig ist, dass die elektrische Verbindung zwischen dem Wischarm und dem Wischblatt nur einpolig ausgeführt und dadurch ein Stromfluss über den Wischarm und den Wischarm sowie Wischblattadapter erforderlich ist, was insbesondere bei Korrosion zu Störungen beim Beheizen des Wischblattes führt. Nachteilig ist ferner, dass beim Einsetzen bzw. Fügen des Wischblattadapters in den von dem hakenförmigen Ende des Wischarmes gebildeten Wischarmadapter eine zuverlässige elektrische Verbindung insbesondere bei Fertigungstoleranzen nicht gewährleistet ist.

Bekannt sind weiterhin ebenfalls als Bügelwischblätter ausgebildete elektrisch beheizte Wischblätter (DE-GM 1 989 712), bei denen der elektrische Anschluss des im Wischblatt vorgesehenen Heizelementes über eine äußere, mit einem zweipoligen Stecker versehene und am Wischarm verlegte Versorgungsleitung erfolgt, und zwar durch Verbinden des Steckers mit seitlich am Wischblattkörper vorgesehene Buchsen. Nachteilig ist bei diesen bekannten Wischblättern, dass zusätzlich zu der mechanischen Verbindung zwischen Wischblatt und Wischarm die elektrische Verbindung gesondert hergestellt werden muss, und dass bei montiertem Wischblatt die Steckerverbindung zwischen der äußeren elektrischen Versorgungsleitung und dem Wischblatt nicht nur störend in Erscheinung tritt, sondern auch die Gefahr besteht, dass sich diese elektrische Verbindung während des Wischbetriebes in unerwünschter Weise löst.

Aufgabe der Erfindung ist es, ein elektrisch beheiztes Wischblatt, in Form eines so genannten flachen Wischblattes bzw. so genannten Flachbalkenwischblattes aufzuzeigen, bei welchem bei der mechanischen Verbindung mit dem Wischarm zugleich die elektrische Verbindung mit einer äußeren elektrischen Versorgungsleitung in zuverlässiger Weise hergestellt wird, und zwar unabhängig von eventuellen durch die Fertigung und/oder Montage bedingten Toleranzen.

Zur Lösung dieser Aufgabe ist ein Wischblatt entsprechend dem Patentanspruch 1 ausgebildet.

Eine Besonderheit der Erfindung besteht darin, dass das wischblattseitige elektrische Verbindungselement in einer quer zur Fügerichtung orientierten Raumebene schwimmend bzw. auslenkbar, d.h. in gewissen Grenzen beweglich, vorgesehen ist. Es genügt also, wenn eines der beiden elektrischen Verbindungselemente schwimmend bzw. auslenkbar und das entsprechende andere, d.h. korrespondierende, elektrische Verbindungselement starr bzw. unbeweglich vorgesehen ist. Anders ausgedrückt, ist dieses andere, d.h. korrespondierende, elektrische Verbindungselement für ein Zusammenwirken mit einem elektrischen Verbindungselement ausgebildet ist, welches in einer quer zur Fügerichtung orientierten Raumebene schwimmend bzw. auslenkbar, d.h. in begrenztem Maß beweglich, gehalten ist. Letztendlich umfasst die Erfindung auch eine solche Konstellation, bei welcher beide zum Zusammenwirken bestimmte elektrische Verbindungselemente, d.h. sowohl das wischblattseitige als auch das das wischarmseitige elektrische Verbindungselement in einer quer zur Fügerichtung orientierten Raumebene schwimmend bzw. auslenkbar sind.

Vorteilhaft ist ein zumindest teilweise aus Kunststoffmaterial gefertigter Wischblattadapter, wobei das erste, an dem Tragelement des Wischblattes befestigte Adapterteil als Formteil bzw. als Stanz- und Biegeteil aus Metall und das zweite Adapterteil als Formteil aus Kunststoff hergestellt ist. Das zweite Adapterteil, welches über ein Adaptergelenk gelenkig mit dem ersten Adapterteil verbunden ist, ist für eine formschlüssige Aufnahme im Wischarmadapter ausgebildet.

In bestimmten Fällen kann es aber auch vorteilhaft sein, wenn das erste und das zweite Adapterteil des Wischblattadapters aus Kunststoffmaterial hergestellt sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: den Wischarm einer Scheibenwischanlage zusammen mit einem an diesem Wischarm befestigten Wischblatt gemäß der Erfindung;
- Fig. 2 und 3: in Teildarstellung den Wischarm der Figur 1, zusammen mit den vom Wischarm abgenommenen Wischblatt im Bereich eines Wischblattadapters;
- Fig. 4: in vergrößerter Darstellung den am Wischblatt vorgesehenen Wischblattadapter;
- Fig. 5: in perspektivischer Teildarstellung das Wischblatt, zusammen mit einem Element des Wischblattadapters sowie mit dem wischblattseitigen elektrischen Anschluss- oder Verbindungselement;
- Fig. 6 bis 9: in Schnittdarstellung verschiedene Varianten von so genannten flachen Wischblättern bzw. Flachbalkenwischblättern,
- Fig. 10: in vereinfachter Darstellung einen Schnitt entsprechend der Linie I - I der Figur 4 im Bereich der "schwimmenden" Befestigung des wischblattseitigen elektrischen Verbindungselementes am Wischblattadapter;
- Fig. 11: den Wischarm der Figur 1 in perspektivischer Teildarstellung und in einer Ansicht von unten;
- Fig. 12: das wischarmseitige elektrische Verbindungselement zusammen mit einem Halteblech in Seitenansicht;
- Fig. 13: einen Schnitt entsprechend der Linie II -II der Figur 12;
- Fig. 14: einen Schnitt entsprechend der Linie III - III der Figur 12;
- Fig. 15 und 16: Darstellungen wie die Figuren 13 und 14 bei einer weiteren Ausführungsform, die nicht Teil der Ansprüche ist.

In den Figuren ist mit 1 der Wischarm einer ansonsten nicht näher dargestellten Scheibenwischanlage für Fahrzeuge, beispielsweise für Straßenfahrzeuge, und mit 2 das an einem Ende des Wischarmes 1 mittels einer mechanischen/elektrischen Verbindung 3 lösbar befestigte Wischblatt bezeichnet. Im montierten Zustand ist der Wischarm 1 an seinem der Wischarm-Wischblatt-Verbindung 3 entfernt liegenden und von einem Lagerstück 1.1 gebildeten Ende an einer nicht dargerstellten Wischwelle eines ebenfalls nicht dargestellten Scheibenwischerantriebs befestigt.

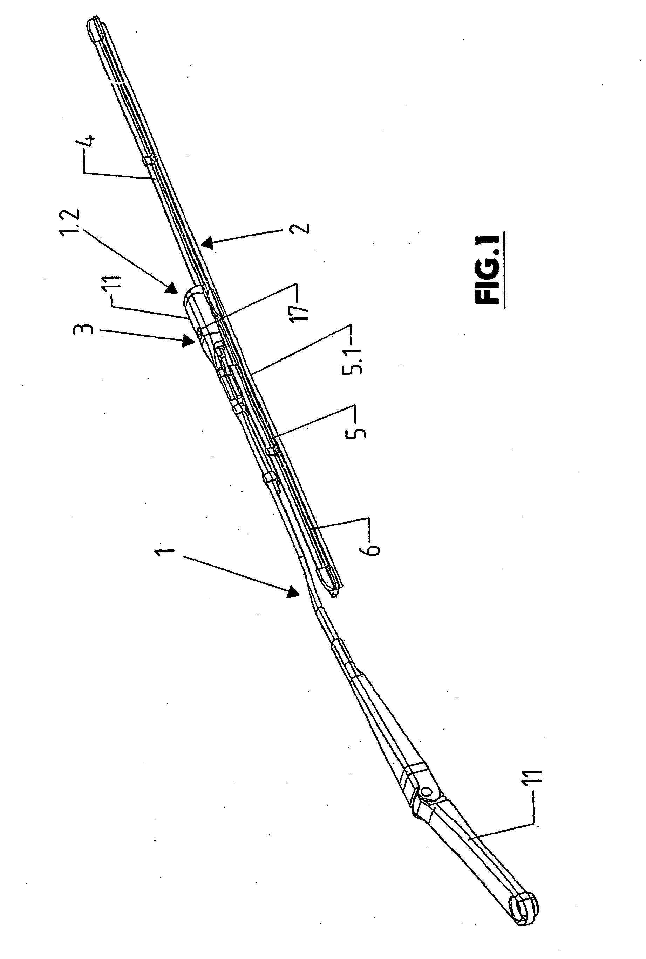

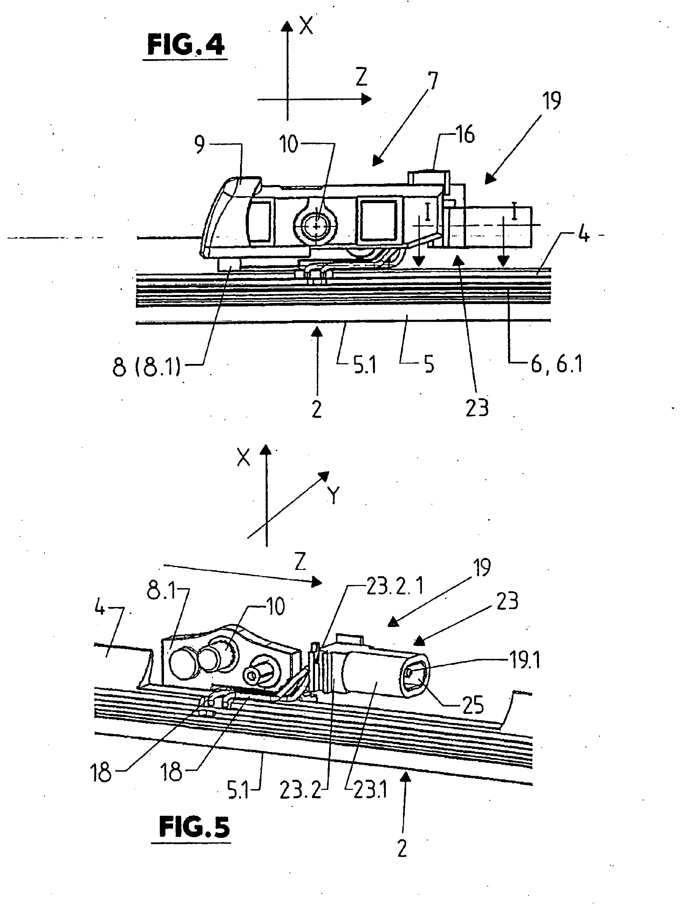

Das in den Figuren 1-9 dargestellte Wischblatt 2 ist als so genanntes flaches Wischblatt bzw. Flachbalkenwischblatt ausgebildet. Es weist in bekannter Weise ein sich über die gesamte Länge des Wischblattes 2 erstreckendes Tragelement 6 auf, an welchem ein sich ebenfalls über die gesamte Länge des Wischblattes 2 erstreckender und aus einem elastomeren Kunststoff oder Gummi hergestellter Wischgummi 5 gehalten ist.

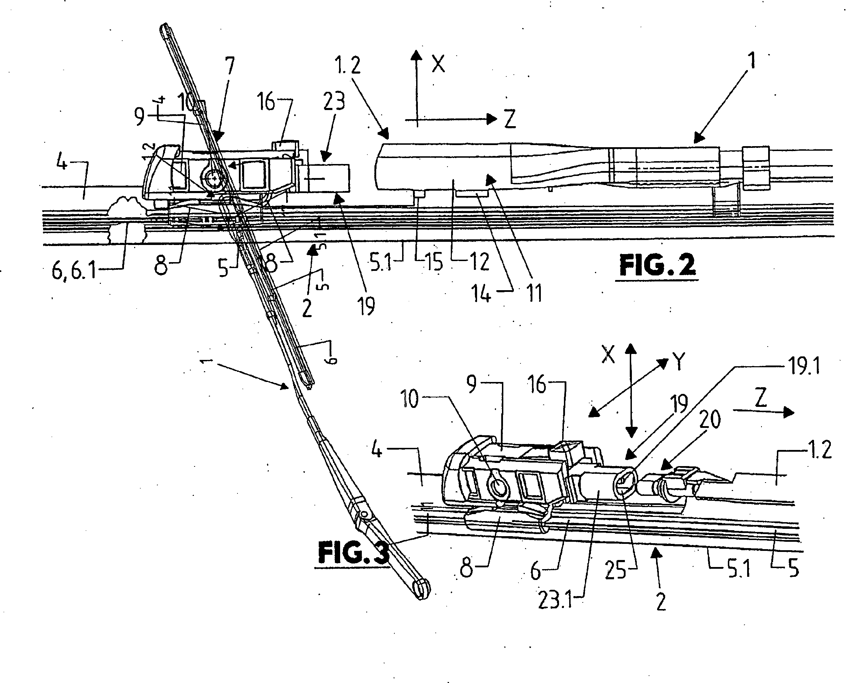

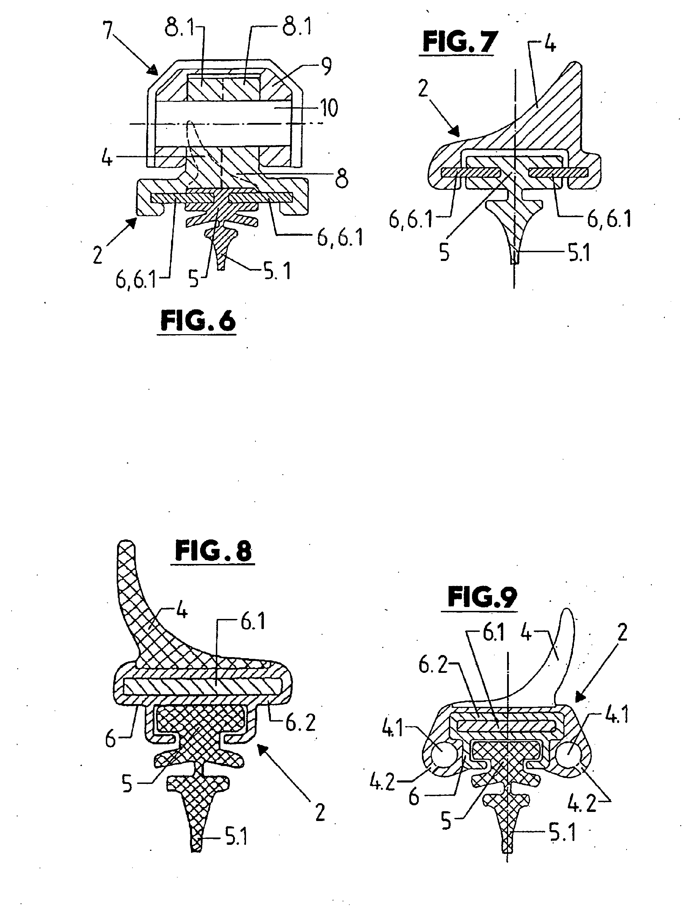

In den Figuren 2-7 wird das Tragelement 6 von zwei flachen Federschienen 6.1 aus Federstahl gebildet, die in geeigneter Weise miteinander verbunden sind und die mit einem Teil ihrer Breite in Längsnuten an den Seiten des Wischgummis 5 eingreifen, wobei der andere Teil der Breite seitlich aus dem Wischgummi 5 hervorsteht. Zur lösbaren Befestigung des Wischblattes 2 ist an diesem in der Wischblattmitte oder etwa in der Wischblattmitte ein Wischblattadapter 7 vorgesehen, der zweiteilig ausgebildet ist und aus einem ersten Adapterteil 8 und einem zweiten Adapterteil 9 besteht, die mittels eines Gelenkbolzens 10 schwenkbar miteinander verbunden sind. Das Adapterteil 8 ist dabei mittelbar oder unmittelbar an dem von den Federschienen 6.1 gebildeten Tragelement 6 des Wischblattes 2 befestigt, und zwar den Wischgummi 5 an seiner der Wischlippe 5.1 abgewandten Oberseite reiterartig übergreifend. Hierfür besteht das erste Adapterteil 8 bei der dargestellten Ausführungsform aus zwei im Wesentlichen plattenförmigen Adapterteilelementen 8.1, von denen jedes an einer Längsseite des Wischblattes 2 einen dortigen Randbereich einer Federschiene 6.1 formschlüssig übergreifend vorgesehen ist. Die beiden Adapterteilelemente 8.1 sind über Verbindungselemente miteinander verbunden, so dass das von zwei Federschienen 6.1 gebildete Tragelement 6 zwischen den Adapterteilelementen 8.1 gehalten ist. Der zwischen den Federschienen 6.1 gehaltene Wischgummi 5 ist hier an seiner Oberseite mit einem einstückig mit dem Wischgummi ausgebildeten Spoiler 4 versehen. Das ist auch aus Figur 6 ersichtlich, die einen Querschnitt eines flachen Wischblattes im Bereich des Wischblattadapters 7 und zwar durch die Achse des Gelenkbolzens 10 zeigt.

Es ist auch möglich, dass der Spoiler 4 als separates Teil ausgebildet und an den Federschienen 6.1 befestigt bzw. gehalten ist. Eine solche Ausgestaltung ist aus Figur 7 ersichtlich, wobei hier ein Querschnitt außerhalb des Wischblattadapters gezeigt ist.

Ein flaches Wischblatt 2 kann stattdessen auch so gestaltet sein, dass das Tragelement 6 eine längliche, elastische, den Wischgummi 5 mit dessen Kopfteil aufnehmende Profilschiene 6.2 ist, wobei erforderlichenfalls eine oder mehrere Federschienen 6.1 aus Metall oder auch aus Kunststoffmaterial am oder im Wischgummi 5 und/oder innerhalb der Profilschiene 6.2 angeordnet sind. Der Wischblattadapter ist in solchen Fällen an der Profilschiene 6.2 angebracht. An der Oberseite des Tragelementes 6 kann, wie aus Figur 8 ersichtlich, ein einstückig mit der Profilschiene verbundener Spoiler 4 vorhanden sein. Stattdessen kann, wie in Figur 9 gezeigt, auch ein separat hergestellter Spoiler 4 an der Oberseite der das Tragelement 6 bildenden Profilschiene 6.2 angebracht, bevorzugt aufgeklipst, sein. Die Wischblätter können natürlich in an sich bekannter Weise mit weiteren technischen Details ausgestattet sein, beispielsweise wie in Figur 9 angedeutet mit Flüssigkeitskanälen 4.1 und Austrittsöffnungen 4.2 für die Abgabe von Waschflüssigkeit auf die zu reinigende Scheibe.

Das erste Adapterteil 8 ist mit einem Gelenkbolzen 10 gelenkig mit dem zweiten Adapterteil 9 verbunden, und zwar in der Weise, dass eine begrenzte Schwenkbewegung des Adapterteils 8 und damit des Wischblattes 2 relativ zum Adapterteil 9 und bei am Wischarm 1 befestigtem Wischblatt 2 relativ zum Wischarm 1 möglich ist, und zwar um die Achse des Gelenkbolzens 10, die senkrecht oder quer zu einer die Wischlippe 5.1 einschließenden Mittelebene des Wischblattes 2 orientiert ist.

Der Wischblattadapter 7 ist Teil der lösbaren Verbindung 3 zwischen dem Wischblatt 2 und dem Wischarm 1, wobei der Wischarm 1 für diese Verbindung an seinem freien, dem Lagerstück 1.1 entfernt liegenden Ende mit einem Wischarmadapter 11 mit einer Aufnahme- oder Adapteröffnung 11.1 versehen oder ausgebildet ist. In die Adapteröffnung 11.1 ist das Adapterteil 9 von dem freien Ende 1.2 des Wischarmes 1 her in einer Fügerichtung bzw. in der Z-Achse einsetzbar, und zwar derart, dass das Adapterteil 9 dann in der Adapteröffnung 11.1 formschlüssig und durch Verrasten gehalten ist. Das erste Adapterteil 8 des Wischblattadapters 7 und der Gelenkbolzen 10 sind aus Metall und das zweite Adapterteil 9 ist als Formteil aus Kunststoff gefertigt.

Für die formschlüssige Anordnung des zweiten Adapterteils 9 ist die Adapteröffnung 11.1 des Wischarmes 1 von einem U-Profil mit den beiden parallel und im Abstand voneinander angeordneten Schenkeln 12 und dem diese verbindenden Jochabschnitt 13 gebildet. An dem dem Jochabschnitt 13 entfernt liegenden freien Rand sind die Schenkel 12 jeweils mit Abwinklungen 14 und 15 versehen, so dass das Adapterteil 9 nach dem Einsetzen in die Adapteröffnung 11.1 an seiner Oberseite und seinen beiden, parallel oder im Wesentlichen zur Längserstreckung des Wischblattes 2 verlaufenden Längsseiten formschlüssig von dem Jochabschnitt 13 und den Schenkeln 12 umgriffen und hierdurch beim Fügen eindeutig geführt wird. Weiterhin hintergreifen die Abwinklungen 14 und 15 das Adapterteil 9 auch an seiner dem Adapterteil 8 bzw. dem Wischblatt 2 zugewandten Unterseite formschlüssig. An der Oberseite ist das zweite Adapterteil 9 mit einem an einer federnden Zunge ausgebildeten Vorsprung 16 versehen, der nach dem Einsetzen des Adapterteils 9 in die Adapteröffnung 11.1 als Rastmittel in eine am Jochabschnitt 13 vorgesehene Ausnehmung 17 eingreift und dadurch den Wischblattadapter 7 durch Verrasten am Wischarm 1 sichert.

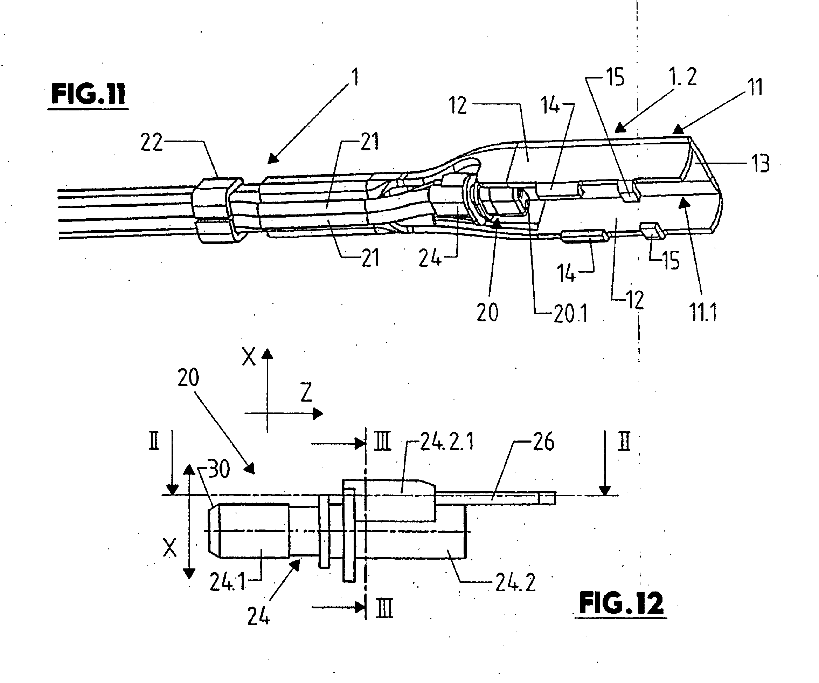

Wie insbesondere die Figur 11 zeigt, ist die Adapteröffnung 11.1 weiterhin so ausgebildet, dass das U-Profil sowohl zum freien Ende des Wischarmes als auch zur Wischarmunterseite offen ist, die bei montiertem Wischarm 1 zumindest während des Wischbetriebes der Fahrzeugscheibe zugewandt ist.

Um ein Vereisen des Wischblattes 2 und dabei beispielsweise des die Wischlippe 5.1 mit dem restlichen Teil des Wischgummis 5 verbindenden Kippsteges und/oder eines oder mehrerer Spritzkanäle 4.1 zu vermeiden, die im aufgesetzten Spoilerteil 4 (Figur 9) oder auch im Wischgummi oder an der Profilschiene 6.2 ausgebildet bzw. vorgesehen und mit einer Vielzahl von Austrittsöffnungen 4.2 zum Ausbringen einer Wasch- und Reinigungsflüssigkeit auf die Fahrzeugscheibe versehen sind, ist das Wischblatt 2 als elektrisch beheiztes Wischblatt ausgebildet. Hierfür ist im bzw. am Wischblatt 2 oder aber in den Spritzkanälen 4.1.wenigstens ein elektrisches Heizelement vorgesehen. Dieses Heizelement kann die unterschiedlichsten Ausbildungen aufweisen, beispielsweise in Form einer Heizfolie oder aber in Form eines Heizdrahtes. Bei der in den Figuren dargestellten Ausführungsform besteht das Heizelement aus einem derartigen Heizdraht 18.

Um bei der mechanischen Befestigung des Wischblattes 2 am Wischarm 1 zugleich auch automatisch, d.h. allein durch das Einführen des Adapterteils 9 in die Adapteröffnung 11.1, die erforderliche elektrische Verbindung zum Heizelement bzw. Heizdraht 18 herzustellen, ist die Verbindung 3 als mechanisch/elektrische Verbindung ausgebildet, und zwar zusätzlich zu den bereits vorstehend erwähnten, die mechanische Verbindung bewirkenden Elementen mit einem wischblattseitigen elektrischen Verbindungselement 19 und einem wischarmseitigen Verbindungselement 20.

Die beiden Verbindungselemente 19 und 20 sind jeweils zweipolig ausgeführt, und zwar bei der dargestellten Ausführungsform das Verbindungselement 19 als zweipoliger Stecker mit den Kontaktstiften 19.1 und das Verbindungselement 20 mit den Kontaktbuchsen 20.1. An das Verbindungselement 19 bzw. an die Kontaktstifte 19.1 sind die beiden Enden des Heizdrahtes 18 angeschlossen. An das Verbindungselement 20 bzw. an die dortigen Kontaktbuchsen 20.1 sind die Enden einer zweiadrigen elektrischen Versorgungsleitung 21 angeschlossen, die entlang des Wischarmes 1 an dessen Unterseite verläuft und über die das beheizbare Wischblatt 2 mit dem erforderlichen Heizstrom aus dem fahrzeugseitigen Bordnetz versorgt wird. Mit Hilfe von Halterungen bzw. Klammern 22 ist die Leitung 21 an der Unterseite des Wischarmes 1 gehalten. Wenn spezielle Ausbildungen oder Anordnungen der elektrischen Heizelemente dies erfordern, können die wischblattseitigen bzw. wischarmseitigen elektrischen Verbindungselemente 19, 20 auch mit mehr als zwei Polen bzw. Kontakten ausgestattet sein.

Die elektrischen Verbindungselemente 19 bzw. 20 bestehen jeweils aus einem als Formteil aus Kunststoff hergestellten Gehäuse 23 bzw. 24. Das Gehäuse 23 des wischblattseitigen Verbindungselementes 19 ist dabei so geformt, dass es einen hülsen- oder buchsenartigen Gehäuseabschnitt 23.1 bildet, in dessen Öffnung 25 die beiden Kontaktstifte 19.1 aufgenommen sind. Die Öffnung 25 ist an der dem freien Ende der Kontaktstifte 19.1 benachbarten Stirnseite des Gehäuseabschnittes 23.1 offen. Weiterhin bildet das Gehäuse 23 einen Gehäuseabschnitt 23.2, mit dem das Gehäuse 23 am Adapterteil 9 gehalten ist, und zwar derart, dass die Achse der Öffnung 25 und damit auch die zu dieser Achse parallelen und voneinander beabstandeten Steckerkontakte in Wischblattlängsrichtung respektive parallel zur Wischarmlängsrichtung, d.h. in Richtung der Z-Achse orientiert sind.

Zum besseren Verständnis der nachfolgenden Ausführungen sind in den Figuren jeweils drei senkrecht zueinander orientierte Raumachsen angegeben, nämlich die X-Achse, Y-Achse und Z-Achse, von denen die X-Achse und die Y-Achse quer und die Z-Achse parallel zur Längserstreckung des Wischblattes 2 bzw. des Wischarmes 1 orientiert sind, so wie das in den betreffenden Figuren dargestellt ist. Bei dieser vorstehenden Definition der Orientierung der Raumachsen wurde ausdrücklich vernachlässigt, dass das zweite Adapterteil 9 in gewissen Grenzen relativ zu dem am Wischblatttragelement 6 befestigten ersten Adapterteil 8 verschwenkbar ist. Die im Zusammenhang mit der Erfindung als "Fügerichtung" definierte Richtung verläuft in Richtung der als Z-Achse bezeichneten Raumachse.

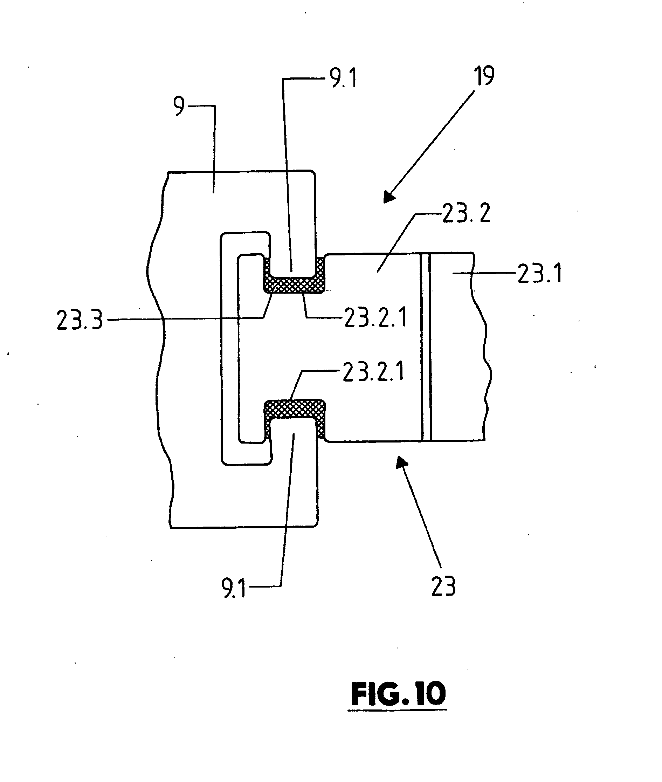

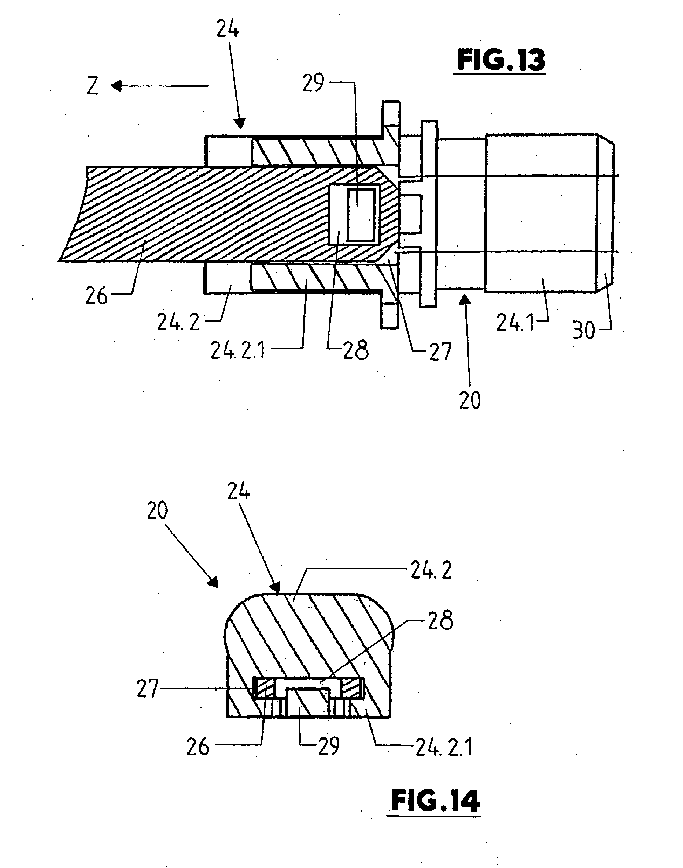

Bei der in den Figuren 2 -5 und 10 - 14 dargestellten Ausführungsform ist das Gehäuse 23 des wischblattseitigen elektrischen Verbindungselementes 19 schwimmend an dem zweiten Adapterteil 9 gehalten, und zwar derart, dass in einem begrenzten Ausmaß eine Bewegung des Gehäuses 23 und damit des elektrischen Verbindungselementes 19 in der Raumebene quer zur Z-Achse relativ zum zweiten Adapterteil 9 möglich ist, wie dies z.B. in der Figur 3 mit den in der X-Achse und der Y-Achse verlaufenden Doppelpfeilen angedeutet ist. Die schwimmende Verbindung zwischen dem Gehäuse 23 und dem Adapterteil 9 ist beispielsweise dadurch erreicht, dass an das Adapterteil 9 angeformte Stege 9.1 mit ausreichend großem Spiel in an der Außenfläche des Gehäuseabschnittes 23.2 geformte Ausnehmungen 23.2.1 eingreifen. Auch andere Möglichkeiten für die schwimmende Anordnung des Gehäuses 23 sind denkbar, beispielsweise in der Form, dass das Gehäuse 23 über einen elastischen Abschnitt oder ein elastisches Material 23.3 am Adapterteil 9 gehalten ist und/oder das Gehäuse 23 zumindest an seinem Gehäuseabschnitt 23.2 oder aber insgesamt aus einem elastischen Material hergestellt ist, so dass die quasi schwimmende Anordnung oder Verbindung des Gehäuses mit dem Adapterteil 9 durch die Eigenelastizität des Gehäuseabschnitts 23.2 erreicht ist.

Die Befestigung des Gehäuses 23 an dem zweiten Adapterteil 9 ist weiterhin so, dass die Öffnung 25 mit ihrer offenen Seite dem Adapterteil 9 abgewandt ist und das Gehäuse über die Schmalseite des Adapterteils 9 vorsteht.

Das Gehäuse 24 des wischarmseitigen elektrischen Verbindungselementes 20 besteht aus einem Gehäuseabschnitt 24.1, in dem die die beiden Kontaktbuchsen 20.1 aufgenommen sind, und zwar derart, dass diese Kontakte an einer Stirnseite des Gehäuseabschnitts 24.1 zur Aufnahme oder zum Einführen der Kontaktstifte 19.1 freiliegen. An den Gehäuseabschnitt 24.1 schließt sich der Gehäuseabschnitt 24.2 an, mit dem das Gehäuse 24 durch Verrasten an einer Haltelasche oder an einem Halteblech 26 befestigt ist, welches seinerseits am Wischarm 1 derart gehalten ist, dass sich das Gehäuse 24 und damit das wischarmseitige elektrische Verbindungselement 20 innerhalb der Adapteröffnung 11.1 befinden, und zwar in der Weise, dass die die Kontaktbuchsen 20.1 aufweisende Stirnseite des Gehäuseabschnittes 24.1 der am freien Ende 1.2 des Wischarmes 1 vorgesehenen offenen Seite der Adapteröffnung 11.1 mit Abstand gegenüberliegt, wie dies in der Figur 11 dargestellt ist. Die Verbindung des Gehäuses 24 mit dem Wischarm 1 über das Halteblech 26 ist derart, dass das Gehäuse 24 und damit das wischarmseitige Verbindungselement 20 fest oder im Wesentlichen fest, d.h. nicht schwimmend, in der Adapteröffnung 11.1 vorgesehen ist.

Für die verrastende Verbindung des Gehäuses 24 an dem Halteblech 26 ist der Gehäuseabschnitt 24.2 mit einer seitlichen Verbreiterung 24.2.1 versehen, die eine an die Dicke und Breite des Halteblechs 26 angepasste schlitzförmige Öffnung 27 aufweist, mit der das Gehäuse 24 auf ein Ende des Halteblechs 26 aufgeschoben und dort durch Verrasten fixiert ist. Hierfür weist das Halteblech 26 eine Öffnung 28 auf, in die durch Verrasten eine an der Verbreiterung 24.2.1 angeformte Rastnase 29 verrastend eingreift.

Der Gehäuseabschnitt 24.1 ist an seiner Außenfläche dem Querschnitt der Öffnung 25 angepasst, so dass der Gehäuseabschnitt 24 formschlüssig in die Öffnung 25 eingeführt werden kann und dabei die Steckerkontakte 19.1 in die Kontaktbuchsen 20.1 eingreifen und so die elektrische Verbindung zwischen den elektrischen Verbindungselementen 19 und 20 und damit zwischen dem wischblattseitigen Heizelement und der Anschlussleitung hergestellt wird. Durch die schwimmende Anordnung des Verbindungselementes 19 am Adapterteil 9 sowie auch durch die Abschrägung 30 des Gehäuseabschnittes 24.1 an seiner beim Einführen in die Öffnung 25 vorauseilenden Stirnseite erfolgt automatisch eine gegenseitige Ausrichtung der miteinander zu verbindenden Teile. Dadurch ist über die mechanisch/elektrische Verbindung 3 zugleich mit dem mechanischen Verbinden auch das problemlose und sichere elektrische Verbinden des Wischblattes 2 mit dem Wischarm 1 gewährleistet.

Die beiden elektrischen Verbindungselemente 19 und 20 bzw. deren Gehäuse 23 und 24 sind so ausgebildet und angeordnet, dass nach dem Herstellen der mechanischen und elektrischen Verbindungen der Übergang zwischen den Verbindungselementen 19 und 20 bzw. den Gehäusen 23 und 24 abgedichtet ist, insbesondere gegen ein unerwünschtes Eindringen von Schmutz und Wasser bzw. Feuchtigkeit. Dies ist deswegen von großer Bedeutung, weil Scheibenwischanlagen in der Regel unter rauhen äußeren Betriebsbedingungen eine hohe Funktionssicherheit aufweisen müssen. Für die Abdichtung ist der Gehäuseabschnitt 24.1 am Übergang zu dem einen vergrößerten Durchmesser aufweisenden Gehäuseabschnitt 24.2 mit angeformten, den Anschlussbereich zwischen den Gehäuseteilen abdichtenden Dichtungsrippen versehen.

Vorstehend wurde davon ausgegangen, dass das wischblattseitige elektrische Verbindungselement 19 schwimmend und das wischarmseitige Verbindungselement 20 nicht schwimmend oder im Wesentlichen nicht schwimmend angeordnet sind, und zwar bei entsprechend starrer Ausbildung des Halteblechs 26.

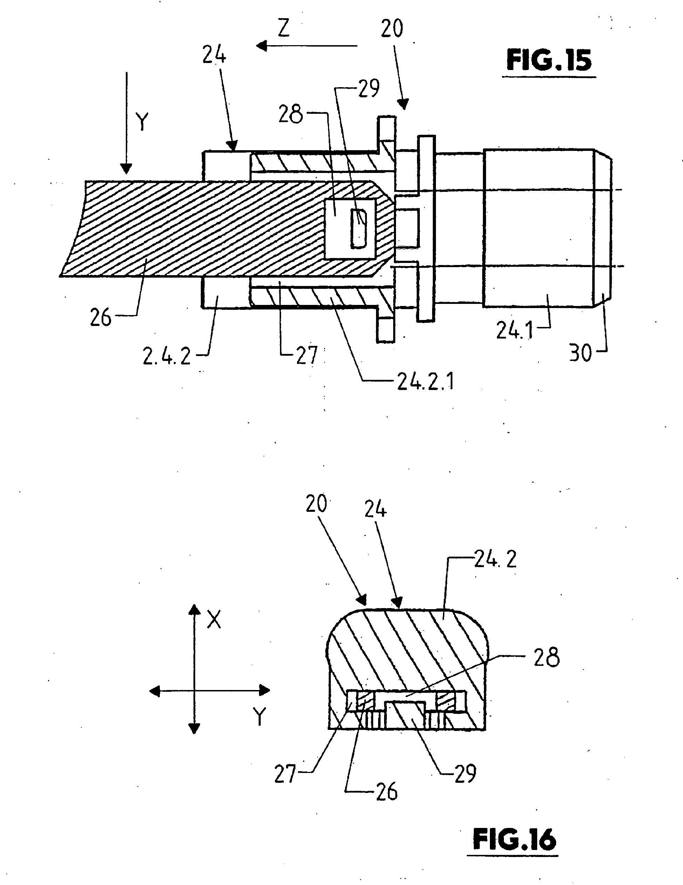

Die Figuren 15 und 16 zeigen demgegenüber eine Befestigung des wischarmseitigen elektrischen Verbindungselementes 20 bzw. dessen Gehäuses 24 in der Weise, dass dieses Verbindungselement schwimmend oder weitestgehend schwimmend am Wischarm 1 oder in der Adapteröffnung 11.1 angeordnet ist. Hierfür ist das Halteblech 26 so ausgeführt, dass es blattfederartig wirkt und dadurch eine schwimmende Befestigung des Verbindungselemente 20 bzw. des Gehäuses 24 in einer Achsrichtung im Wesentlichen senkrecht zu den Oberflächenseiten des Halteblechs 26, d.h. in Richtung der X-Achse erreicht wird, wie dies in der Figur 16 mit dem in der X-Achse orientieren Doppelpfeil angedeutet ist. Bei dieser Ausführungsform ist dann entsprechend der Figur 15 die Öffnung 27 so ausgeführt, dass sie in der Y-Achse eine Breite aufweist die etwas größer ist als die Breite des Federblechs 26, so dass für das befestigte Gehäuse 24 auch eine Beweglichkeit in der Y-Achse erreicht ist, wie dies in der Figur 12 mit dem Doppelpfeil in der Y-Achse angedeutet ist. Das elektrische Verbindungselement 20 ist somit schwimmend gehalten, und zwar wiederum für ein problemloses Verbinden der elektrischen Verbindungselemente 19 und 20 zugleich beim Herstellen der mechanischen Verbindung zwischen dem Wischblatt 2 und dem Wischarm 1.

### Bezugszeichenliste

- 1: Wischarm
- 1.1: Gelenkträger
- 1.2: freies Ende des Wischarmes
- 2: Wischblatt
- 3: mechanisch/elektrische Verbindungsanordnung
- 4: Spoiler
- 4.1: Flüssigkeltskanal
- 4.2: Austrittsöffnung
- 5: Wischgummi
- 5.1: Wischlippe
- 6: Tragelement
- 6.1: Federschiene
- 6.2: Profilschiene
- 7: Wischblattadapter
- 8: erstes Adapterteil
- 9: zweites Adapterteil
- 8.1: Adapterteilelement
- 9.1: Steg
- 9.2: elastisches Material
- 10: Gelenkbolzen
- 11: Wischarmadapter
- 11.1: Adapteröffnung
- 12: Schenkel
- 13: Jochabschnitt
- 14, 15: Abwinklung
- 16: Vorsprung
- 17: Öffnung
- 18: Heizdraht
- 19, 20: elektrisches Verbindungselement
- 19.1: Kontaktstift
- 20.1: Kontaktbuchse
- 21: elektrische Versorgungsleitung
- 22: Befestigungselement
- 23, 24: Gehäuse
- 23.1, 23.2: Gehäuseabschnitt
- 23.2.1: Ausnehmung
- 24.1, 24.2: Gehäuseabschnitt
- 24.2.1: Verbreiterung
- 25: Öffnung
- 26: Halteblech
- 27: Öffnung
- 28: Öffnung
- 29: Rast
- 30: Fase oder Abschrägung
- X, Y, Z: Raumachse

## Patentansprüche

1. Flaches Wischblatt zum Reinigen von Scheiben an Fahrzeugen mit wenigstens einem länglichen Tragelement (6), an welchem ein zumindest eine Wischlippe (5.1) aufweisender Wischgummi (5) gehalten ist, mit einem an dem Tragelement (6) befestigten Wischblattadapter (7), der zum lösbaren mechanischen Verbinden des Wischblattes (2) mit einem Wischarm (1) bzw. mit einem am Wischarm (1) vorgesehenen Wischarmadapter (11) in einer Fügerichtung (Z-Achse) ausgebildet ist, mit wenigstens einem an dem Wischblatt (2) vorgesehenen elektrischen Heizelement, sowie mit wenigstens einem am Wischblattadapter (7) vorgesehenen wischblattseitigen elektrischen Verbindungselement (19), welches zumindest einen elektrischen Kontakt aufweist, zum Herstellen einer elektrischen Verbindung zwischen dem Heizelement und einer am Wischarm (1) vorgesehenen bzw. gehaltenen Stromzufuhr, wobei das wischblattseitige elektrische Verbindungselement (19) zum lösbaren Verbinden mit einem am Wischarm (1) bzw. am Wischarmadapter (11) vorgesehenen wischarmseitigen elektrischen Verbindungselement (20) in der gleichen Fügerichtung (Z-Achse) wie die des Wischblattadapters (11) ausgebildet ist, und wobei,
das wischblattseitige elektrische Verbindungselement (19) in einer quer zur Fügerichtung (Z- Achse) orientierten Raumebene (X-Y-Achse) schwimmend bzw. auslenkbar angebracht ist.

2. Flaches Wischblatt nach Anspruch 1 , **dadurch gekennzeichnet, dass** der Wischblattadapter (7) mit Mitteln zum Verrasten bzw. Verriegeln mit dem Wischarm (1) bzw. dem Wischarmadapter (11) ausgestattet ist.

3. Flaches Wischblatt nach Anspruch 1 oder 2, **dadurch gekennzeichnet, dass** der Wischblattadapter (7) aus wenigstens zwei über ein Adaptergelenk (10) gelenkig miteinander verbundenen Adapterteilen (8, 9) besteht, von denen das erste Adapterteil (8) an dem Tragelement (4) befestigt und das zweite Adapterteil (9) für eine Verbindung mit dem Wischarm (1) bzw. dem Wischarmadapter (11) ausgebildet ist.

4. Flaches Wischblatt nach einem der vorhergehenden Ansprüche, **dadurch gekennzeichnet, dass** das wenigstens eine wischblattseitige elektrische Verbindungselement (19) an einer quer zur Fügerichtung (Z-Achse) orientierten Schmal- oder Stirnseite des Wischblattadapters (7) bzw. des zweiten Adapterteils (9) und dabei für die elektrische Verbindung zugänglich und/oder über diese Schmal- oder Stirnseite hervorstehend ist.

5. Flaches Wischblatt nach einem der vorhergehenden Ansprüche, **dadurch gekennzeichnet, dass** der wenigstens eine elektrische Kontakt des wischblattseitigen Verbindungselementes (19) ein Kontaktstift (19.1) oder eine Kontaktbuchse ist und mit der Achse in Fügerichtung (Z-Achse) orientiert ist.

6. Flaches Wischblatt nach einem der vorhergehenden Ansprüche, **dadurch gekennzeichnet, dass** das wenigstens eine wischblattseitige elektrische Verbindungselement (19) ein Gehäuse (23) aus einem elektrisch isolierenden Material mit einem buchsenartigen Gehäuseabschnitt (23.1) aufweist, welcher mit seiner Achse in Fügerichtung (Z-Achse) orientiert ist und welcher zur Aufnahme eines korrespondierenden Gehäuseabschnittes (24.1) eines Gehäuseabschnittes des wischarmseitigen elektrischen Verbindungselementes (20) ausgebildet ist, und dass in dem buchsenartigen Gehäuseabschnitt (23.1) der wenigstens eine elektrische Kontakt des wischblattseitigen Verbindungselementes (19) angeordnet ist.

7. Flaches Wischblatt nach einem der Ansprüche 1 bis 5, **dadurch gekennzeichnet, dass** das wenigstens eine wischblattseitige elektrische Verbindungselement (19) ein Gehäuse (23) aus einem elektrisch isolierenden Material mit einem in Fügerichtung (Z-Achse) orientierten zapfenartigen Gehäuseabschnitt aufweist, welcher zum passenden Einführen in einen buchsenartigen Gehäuseabschnitt des wischarmseitigen elektrischen Verbindungselementes (20) ausgebildet, und dass an dem zapfenartigen Gehäuseabschnitt der wenigstens eine elektrische Kontakt des wischblattseitigen Verbindungselementes (19) vorgesehen ist.

8. Flaches Wischblatt nach einem der vorhergehenden Ansprüche, **dadurch gekennzeichnet, dass** die Fügerichtung (Z-Achse) in Längsrichtung des Wischblattes (2) bzw. des Wischarmes (1) orientiert ist.

9. Flaches Wischblatt nach einem der vorhergehenden Ansprüche, **dadurch gekennzeichnet, dass** das elektrische Heizelement von wenigstens einer Heizfolie oder von wenigstens einem Heizdraht (18) gebildet ist.

10. Flaches Wischblatt nach einem der vorhergehenden Ansprüche, **dadurch gekennzeichnet, dass** der Wischblattadapter (7) bzw. dessen zweites Adapterteil (9) für eine formschlüssige Aufnahme in einer von dem Wischarmadapter (11) gebildeten Öffnung (11.1) ausgebildet ist.

11. Flaches Wischblatt nach einem der vorhergehenden Ansprüche, **dadurch gekennzeichnet, dass** es als so genanntes flaches Wischblatt bzw. als so genanntes Flachbalkenwischblatt ausgebildet ist.

12. Scheibenwischanlage, umfassend ein Flaches Wischblatt nach einem der Ansprüche 1 bis 11 und einen Wischarm.

## Claims

1. Flat wiper blade for cleaning windscreens on vehicles, having at least one elongated carrier element (6), on which a wiper rubber (5) presenting at least one wiping lip (5.1) is held, having a wiper blade adapter (7) fixed to the carrier element (6), designed for detachable mechanical connection of the wiper blade (2) to a wiper arm (1) and to a wiper arm adapter (11) provided on the wiper arm (1) in an assembly direction (Z axis), having at least one electrical heating element provided on the wiper blade (2), and having at least one electrical connecting element (19) on the wiper blade side provided on the wiper blade adapter (7), presenting at least one electrical contact, for establishment of an electrical connection between the heating element and a current supply provided and held on the wiper arm (1), wherein the electrical connecting element (19) on the wiper blade side is designed for detachable connection to an electrical connecting element (20) on the wiper arm side provided on the wiper arm (1) and on the wiper arm adapter (11) in the same assembly direction (Z axis) as that of the wiper blade adapter (11) and wherein the electrical connecting element (19) on the wiper blade side is mounted floating and deflectable in a spatial plane (X-Y axis) crossways in relation to the assembly direction (Z axis).

2. Flat wiper blade according to claim 1, **characterised in that** the wiper blade adapter (7) is equipped with means for catch engagement and locking with the wiper arm (1) and the wiper arm adapter (11).

3. Flat wiper blade according to claim 1 or 2, **characterised in that** the wiper blade adapter (7) consists of at least two adapter sections (8, 9) articulated to each other by means of an adapter joint (10), of which the first adapter section (8) is attached to the carrier element (4) and the second adapter section (9) is designed for connection to the wiper arm (1) and to the wiper arm adapter (11).

4. Flat wiper blade according to any of the above claims, **characterised in that** the at least one electrical connecting element (19) on the wiper blade side is accessible on a narrow or front face of the wiper blade adapter (7) and of the second adapter section (9) oriented crossways in relation to the assembly direction (Z axis) and in so doing is accessible for the electrical connection and/or protrudes over this narrow or front face.

5. Flat wiper blade according to any of the above claims, **characterised in that** the at least one electrical contact of the connecting element (19) on the wiper blade side is a contact pin (19.1) or a contact socket and is oriented with the axis in the assembly direction (Z axis).

6. Flat wiper blade according to any of the above claims, **characterised in that** the at least one electrical connecting element (19) on the wiper blade side presents a housing (23) made of an electrically insulating material with a socket-like housing section (23.1), the axis of which is oriented in the assembly direction (Z axis) and which is designed to receive a corresponding housing section (24.1) of a housing section of the electrical connecting element (20) on the wiper arm side and that in the socket-like housing section (23.1), the at least one electrical contact of the connecting element (19) on the wiper blade side is arranged.

7. Flat wiper blade according to any of claims 1 to 5, **characterised in that** the at least one electrical connecting element (19) on the wiper blade side presents a housing (23) made of an electrically insulating material with a pin-like housing section oriented in the assembly direction (Z axis), which is designed for matching insertion into a socket-like housing section of the electrical connecting element (20) on the wiper arm side and that the at least one electrical contact of the connecting element (19) on the wiper blade side is provided on the pin-like housing section.

8. Flat wiper blade according to any of the above claims, **characterised in that** the assembly direction (Z axis) is oriented in the longitudinal direction of the wiper blade (2) and of the wiper arm (1).

9. Flat wiper blade according to any of the above claims, **characterised in that** the electrical heating element is formed of at least one heating foil or of at least one heating wire (18).

10. Flat wiper blade according to any of the above claims, **characterised in that** the wiper blade adapter (7) and the latter's second adapter section (9) is designed to be received with a positive fit in an opening (11.1) formed by the wiper blade adapter (11).

11. Flat wiper blade according to any of the above claims, **characterised in that** it is designed as a so-called flat wiper blade or a so-called flat-bar wiper blade.

12. Windscreen wiper system comprising a flat wiper blade according to one of claims 1 to 11 and a wiper arm.

## Revendications

1. Balai d'essuie-glace plat pour le nettoyage de vitres de véhicules comprenant au moins un élément de support allongé (6) sur lequel est retenue une raclette de balai d'essuie-glace (5) présentant au moins une lèvre de balai d'essuie-glace (5.1), comprenant un adaptateur de balai d'essuie-glace (7) fixé à l'élément de support (6), lequel est réalisé pour la connexion mécanique détachable du balai d'essuie-glace (2) à un bras d'essuie-glace (1) ou à un adaptateur de bras d'essuie-glace (11) prévu sur le bras d'essuie-glace (1) dans une direction d'assemblage (axe Z), comprenant au moins un élément chauffant électrique prévu sur le balai d'essuie-glace (2), et comprenant au moins un élément de connexion électrique (19) du côté du balai d'essuie-glace prévu sur l'adaptateur de balai d'essuie-glace (7), lequel présente au moins un contact électrique pour établir une connexion électrique entre l'élément chauffant et une alimentation en courant électrique fixée ou prévue sur le bras d'essuie-glace (1), l'élément de connexion électrique (19) du côté du balai d'essuie-glace étant réalisé en vue de la connexion détachable à un élément de connexion électrique (20) du côté du bras d'essuie-glace prévu sur le bras d'essuie-glace (1) ou sur l'adaptateur de bras d'essuie-glace (11) dans la même direction d'assemblage (axe Z) que celle de l'adaptateur de balai d'essuie-glace (11), et dans lequel
l'élément de connexion électrique (19) du côté du balai d'essuie-glace est monté de manière flottante ou de manière à pouvoir être dévié dans un plan spatial (axe X-Y) orienté transversalement par rapport à la direction d'assemblage (axe Z).

2. Balai d'essuie-glace plat selon la revendication 1, **caractérisé en ce que** l'adaptateur de balai d'essuie-glace (7) est pourvu de moyens pour l'encliquetage ou le verrouillage au bras d'essuie-glace (1) ou à l'adaptateur de bras d'essuie-glace (11).

3. Balai d'essuie-glace plat selon la revendication 1 ou 2, **caractérisé en ce que** l'adaptateur de balai d'essuie-glace (7) se compose d'au moins deux parties d'adaptateur (8, 9) connectées de manière articulée l'une à l'autre par le biais d'une articulation d'adaptateur (10), la première partie d'adaptateur (8) étant fixée sur l'élément de support (4) et la deuxième partie d'adaptateur (9) étant réalisée en vue d'une connexion au bras d'essuie-glace (1) ou à l'adaptateur de bras d'essuie-glace (11).

4. Balai d'essuie-glace plat selon l'une quelconque des revendications précédentes, **caractérisé en ce que** l'au moins un élément de connexion électrique (19) du côté du balai d'essuie-glace est accessible au niveau d'un côté étroit ou frontal de l'adaptateur de balai d'essuie-glace (7) ou de la deuxième partie d'adaptateur (9) orienté transversalement par rapport à la direction d'assemblage (axe Z) et de ce fait pour la connexion électrique, et/ou fait saillie au-delà de ce côté étroit ou frontal.

5. Balai d'essuie-glace plat selon l'une quelconque des revendications précédentes, **caractérisé en ce que** l'au moins un contact électrique de l'élément de connexion (19) du côté du balai d'essuie-glace est une goupille de contact (19.1) ou une douille de contact et est orienté avec l'axe dans la direction d'assemblage (axe Z).

6. Balai d'essuie-glace plat selon l'une quelconque des revendications précédentes, **caractérisé en ce que** l'au moins un élément de connexion électrique (19) du côté du balai d'essuie-glace présente un boîtier (23) constitué d'un matériau électriquement isolant avec une portion de boîtier de type douille (23.1), qui est orientée avec son axe dans la direction d'assemblage (axe Z) et qui est réalisée de manière à recevoir une portion de boîtier correspondante (24.1) d'une portion de boîtier de l'élément de connexion électrique (20) du côté du bras d'essuie-glace, et **en ce que** l'au moins un contact électrique de l'élément de connexion (19) du côté du balai d'essuie-glace est disposé dans la portion de boîtier de type douille (23.1).

7. Balai d'essuie-glace plat selon l'une quelconque des revendications 1 à 5, **caractérisé en ce que** l'au moins un élément de connexion électrique (19) du côté du balai d'essuie-glace présente un boîtier (23) constitué d'un matériau électriquement isolant avec une portion de boîtier de type tourillon orientée dans la direction d'assemblage (axe Z), laquelle portion de boîtier est réalisée de manière à être introduite avec ajustement dans une portion de boîtier de type douille de l'élément de connexion électrique (20) du côté du bras d'essuie-glace, et **en ce que** l'au moins un contact électrique de l'élément de connexion (19) du côté du balai d'essuie-glace est prévu au niveau de la portion de boîtier de type tourillon.

8. Balai d'essuie-glace plat selon l'une quelconque des revendications précédentes, **caractérisé en ce que** la direction d'assemblage (axe Z) est orientée dans la direction longitudinale du balai d'essuie-glace (2) ou du bras d'essuie-glace (1).

9. Balai d'essuie-glace plat selon l'une quelconque des revendications précédentes, **caractérisé en ce que** l'élément chauffant électrique est formé par au moins un film chauffant ou par au moins un filament chauffant (18).

10. Balai d'essuie-glace plat selon l'une quelconque des revendications précédentes, **caractérisé en ce que** l'adaptateur de balai d'essuie-glace (7) ou sa deuxième partie d'adaptateur (9) est réalisé(e) pour être reçu(e) par engagement positif dans une ouverture (11.1) formée par l'adaptateur de bras d'essuie-glace (11).

11. Balai d'essuie-glace plat selon l'une quelconque des revendications précédentes, **caractérisé en ce qu'**il est réalisé sous forme de balai d'essuie-glace dit plat ou sous forme de balai d'essuie-glace dit à poutre plate.

12. Installation d'essuie-glace comprenant un balai d'essuie-glace plat selon l'une quelconque des revendications 1 à 11 et un bras d'essuie-glace.
